# EUROPEAN PATENT SPECIFICATION

(11) **EP 2 217 051 B1**
(45) Date of publication and mention of the grant of the patent: **18.01.2012**
(21) Application number: 08852378.2
(22) Date of filing: 24.11.2008
(51) Int. Cl.: A01D 46/26

(54) **MACHINE FOR THE INTERCEPTION AND STOWAGE OF DRUPES**
MASCHINE ZUM ABFANGEN UND LAGERN VON STEINFRÜCHTEN
MACHINE D'INTERCEPTION ET D'ARRIMAGE DE DRUPES

(30) Priority: 22.11.2007 IT IS20070006
(43) Date of publication of application: 18.08.2010
(73) Proprietor: Scioli, Giovanni Battista, 86075 Monteroduni (IT)
(72) Inventor: Scioli, Giovanni Battista, 86075 Monteroduni (IT)
(74) Representative: Cinquantini, Bruno
(86) International application number: PCT/IB2008/054924
(87) International publication number: WO 2009/066270

(56) References cited:
- FR-A- 2 527 898
- FR-A- 2 731 872
- FR-A- 2 822 342
- FR-A- 2 864 424
- US-A- 1 811 328
- US-A- 3 698 170

## Description

### Field of the invention

The present invention relates to a machine for the interception and stowage of drupes, obtained by means of beating, particularly used for intercepting, stowing and transporting olives, coffee plant berries, etc.

### State of the art

Document US 3698 170A discloses the subject-matter of the preamble of claim 1.

The problem of the automatic harvest of drupes, for example olives, is becoming increasingly pressing due to the rarefaction of labour, its exorbitant costs and excessively long harvesting times that have a negative impact on the economy of production as well as on the quality of the end product.

The increased use in the last decade of manual harvesting equipment, such as beaters, tree shakers, etc., has partly obviated the problem, but it remains unresolved as far as the harvest of products mechanically removed, which involves the lengthy, demanding use of ground harvest nets.

An alternative consists in using quite simple, economical machines that facilitate the manual spreading and collection of nets on the ground, but there remains the need to complete spreading and collecting the nets manually, with a resultant lengthening of operating times. In addition, in the most frequent case of using manual harvesting equipment, there remains the risk of treading on the olives that have already fallen, to the detriment of the quality of the product. Lastly, since the nets are positioned flat on the ground, no matter how extensive they are, they offer little interception of olives tangentially bouncing off the beaters.

More recently, more complete machines have appeared, capable of wrapping the crown of the plant in a sort of upturned umbrella, causing the drupes to fall by shaking the plant, and channeling the product into containers. The complexity and technological sophistication of these machines, however, make them extremely expensive for small and medium-sized companies, and the exclusive reserve of very large companies or specialist farm contractors.

In summary, the most pressing problem for harvesting olives, which has been greatly speeded up by the use of beating equipment, remains the harvest by means of ground nets, and their spreading and rewinding.

The same problems arise for the interception and stowage of other types of drupe, for example coffee plant berries.

There is therefore a need for a machine for the interception and stowage of drupes that allows to overcome the above-mentioned drawbacks.

### Summary of the invention

The main object of the present invention is to provide a machine for the interception and stowage of drupes that is extremely simple and economical from the point of view of construction, easy to use, and allows to completely eliminate the use of ground nets, and moves into position, intercepts, stows and transports the product very quickly.

Therefore, the present invention suggests to achieve the above discussed object by providing a machine for the interception and stowage of drupes that, according to claim 1, comprises:
- a transportable platform, comprising a container closed at the top by a grilled plane that allows the passage of the drupes into the container and adapted to support at least one operator;
- first support means for supporting at least one first net, the first means being arranged on a first side of the container and adapted to upwardly support at least part of said at least first net;
- second support means for supporting said at least one first net and at least one second net, the second means being arranged on a second side of the container, opposite the first side;
wherein said second support means may be driven by actuators so as to translate parallel to said second side both to support said at least one first net upwards along two sides transversal with respect to said first side, and to spread said at least one second net on a respective plane inclined with respect to the grilled plane to intercept falling drupes and facilitate their rolling towards said grilled plane, said at least one second net being elastic and configured so that it may occlusively wrap around at least one trunk on the harvesting side.

A preferred embodiment of the invention advantageously includes two second nets that are spread over reciprocally staggered planes which are inclined with respect to the grilled plane to intercept falling drupes and facilitate their rolling towards the grilled plane. Once extended, said second nets have a trapezoidal shape and partially overlapping, thus wrapping around a large part of the trunk of the drupe plant, on the harvesting side.

On the other hand, a single first net or three first nets for the lateral interception of the drupes may be provided. Each first net is arranged at the first side and at two sides transversal with respect to said first side of the container, respectively.

The actuators may comprise pneumatic or hydraulic cylinders, or other suitable motion transmission systems. A preferred variant of the invention includes two pneumatic, or possibly hydraulic, cylinders associated with a respective telescopic rod, at one end of which are attached respective second support means.

These second support means comprise a first rod and a second rod, respectively, arranged parallel to the second side of the container and sliding inside a respective tubular support to accommodate the extension of the first and second nets.

Advantageously, at the external end of the first rods there is fixed a respective third, L-shaped rod in which at one end of the shorter arm thereof there is connected a first end of a respective flexible tie-rod, having a length proportional to the stroke of the piston of the pneumatic cylinders and secured at its second end to a proximal corner of the container, and at one end of the longer arm thereof there is provided a respective fastening eyelet for elastic tie-rods of the first nets, so that during the extension of the second nets, when the piston of the pneumatic cylinders approaches the stroke end, each respective flexible tie-rod starts to stretch, putting in traction said shorter arm and causing the longer arm of the respective third rod to rise vertically, providing upward support for the first nets. Fastening eyelets for the elastic tie-rods of the nets are also provided on the first rods and second rods.

On the other hand, the first support means comprises a system of rods fixed at the ends of the first side of the container and fitted on top with fastening eyelets for elastic tie-rods to which the first nets are fixed.

In a first preferred variant of the invention, the container or box is a towable farm trailer on which the grilled plane rests: in this case, the farm trailer/grilled plane set defines the above-mentioned platform. In this case, the pneumatic cylinders and telescopic rods are fixed to the front and rear sides of the farm trailer.

In a second preferred variant of the invention, the platform, comprising the container closed at the top by the grilled plane, is dimensioned such that it may rest on a farm trailer or may be inserted therein. In this case the pneumatic cylinders and telescopic rods are fixed to two sides of the platform, in particular to the two sides of the container corresponding to the front and rear sides of the farm trailer into which the platform is inserted. This solution, which is even simpler from the construction point of view, is equally effective and allows to further reduce production costs.

The machine, object of the present invention, has the following constructive and functional advantages:
- it is constructed using very simple components,
- the simplicity of construction makes it very economically competitive compared to more complex machinery, meaning that the cost of purchase may be amortized very quickly,
- the fact that the machine may be quickly converted into a trailer greatly increases its utilization value and thus makes the investment more profitable,
- it enables the harvest to be carried out by only one operator,
- it eliminates the use of ground nets and the time required to spread and close them,
- it eliminates the time needed to empty the nets and fill the crates,
- it suppresses the use of ladders,
- it reduces the number of drupes falling outside the nets due to bouncing off the beaters,
- it improves the quality of the harvest because it eliminates accidental treading on the drupes, e.g. olives, by operators during beating,
- it automatically eliminates branches from the olives harvested,
- it cancels immediate positioning times around the plant in an almost complete manner, because it works simply by advancing in a straight line along the line of plants,
- it is operational in a few seconds,
- it makes beating and fractional tree shaking much less demanding, using much shorter equipments (extendable rods of about 80 cm may be sufficient),
- it enables harvesting equipment to be used from inside the drupe capture area and not from outside,
- it facilitates a possible manual picking because the fruit-bearing branches are within easy reach, and the picker is not hampered by the container,
- it may move on the road, since its dimensions are within legal limits,
- there is no need for technical preparation for its use,
- it does not require any specific maintenance,
- power consumption is extremely low with respect to the work done, meaning that operating costs are practically zero,
- it speeds up the harvest to such an extent that the need for a second run on the same plant has little impact on the considerable time-saving achieved in harvest operations as a whole.

For simplicity, we refer to olive harvesting below, bearing in mind that the machine of the invention is suitable for the interception and stowage of any type of drupe.

The machine consists of a rectangular, boxed platform, mounted on wheels and towable; the platform is topped by a treading grille that enables the olives to pass through, and by a cage of nets, substantially in the shape of a truncated upturned pyramid when the nets are extended, which, supported by mechanically-driven rods, surrounds three sides of the crown for at least ¾ of its projection on the ground.

In this manner an interception cage is created, that wraps around much more than half of the crown.

The left side of the machine, or alternatively the right side in a second variant of the machine, serves a purely passive function, acting as a static support for the nets, while the right side, or alternatively the left side, is instead the active side and is the peculiar core of this invention.

The machine works tangentially to the trunks along the most convenient line of the olive-grove, and allows the harvest on one side only of the crown (about 3/5 of the projection of the crown on the ground) and then back on the other side.

Towed parallel to the row of trees, the machine is already in position when the central part of its right side, or alternatively of the left side, coincides with the trunk of the plant. At this point the operator activates the single-lever control of a compressed-air distributor and extends two telescopic rods from the right side of the platform, supporting the under-tree crown nets.

At the same time, the same mechanical movement causes two supports to vertically rise, hinged at the end of the telescopic rods, and supporting the right edges of the front and rear peripheral nets of the cage. The entire operation takes only a few seconds and the machine is immediately operative.

The operator (even only one!) accesses the platform and starts harvesting by means of the harvesting equipment. Once the beating or manual picking has been completed, and the pneumatic control lever is reversed, the machine retracts the nets flushing against the right-hand side of the machine and moves, with a simple linear movement, under the next tree.

The dependent claims describe preferred embodiments of the invention.

### Brief description of the drawings

Further features and advantages of the invention will become more apparent from the following detailed description of a preferred, though not exclusive, embodiment of a machine for the interception and stowage of drupes, which is illustrated by way of non-limitative example by the aid of the accompanying drawings, in which:
Figure 1 shows a machine according to the invention in two different operating steps;
Figure 2a shows a rear view of a machine according to the invention;
Figure 2b shows an enlargement of a detail of the view in Figure 2a;
Figure 3 shows a partial view of the machine according to the invention close to a tree;
Figure 4a shows a schematic front view of the machine according to the invention;
Figure 4b shows a schematic rear view of the machine according to the invention;
Figures 5a and 5b show perspective views of details of the machine according to the invention;
Figure 6 shows plan views (A, B, C) of the machine of the invention and some perspective details (D, E);
Figure 7 shows a plan view (A) and a side view (B), respectively, of the machine in

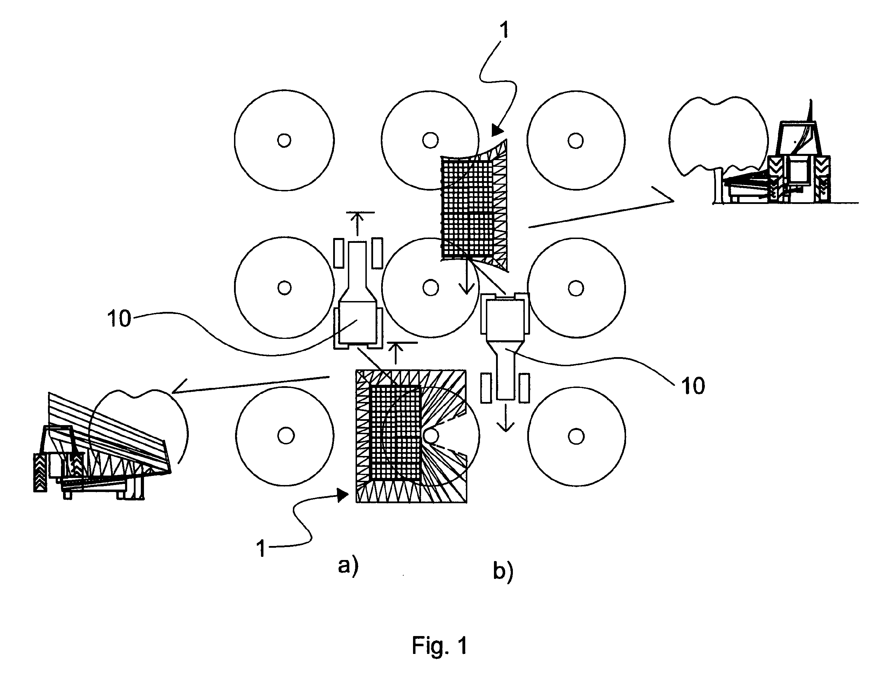

Figure 1, operating at a tree;

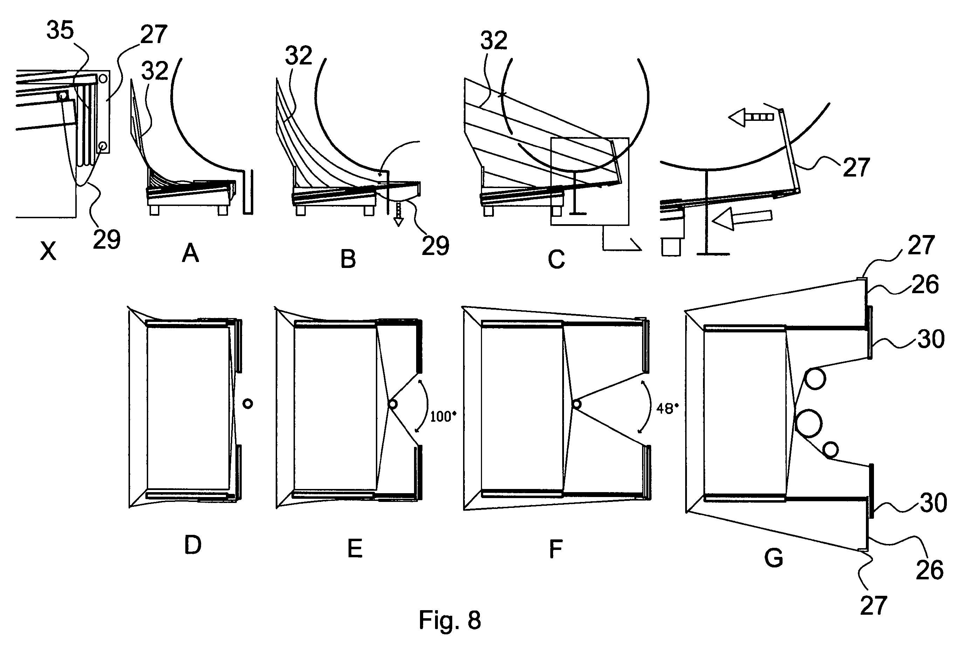

Figure 8 shows side and plan views of the machine according to the invention in various steps of operation.

### Detailed description of a preferred embodiment of the invention

With reference to the Figures, a preferred embodiment of a machine for the interception and stowage of drupes is shown, indicated as a whole by numeral 1. For simplicity, this detailed description refers to the harvesting of olives.

The machine, object of the present invention, comprises:
- a platform 4, comprising a grilled plane 17 resting on a metal container or box 2, possibly tipping, mounted on a frame provided with two wheels 12 at the rear end and at the front end with a drawbar 13, having an eye for being towed by a tractor or drawing vehicle 10,
- a system of elastic tie-rods and olive interception nets,
- two pneumatic cylinders 7 or jacks, powered in parallel by a compressor, e.g. a 12 Volt compressor, installed on the tractor 10 and by a distributor, hoses and pneumatic joints thereof,
- tubular elements made of metal, or another suitable material, with a square and/or cylindrical section,
- a possible hydraulic jack for tipping the container,
- possible accessories required by law for moving on the open road.

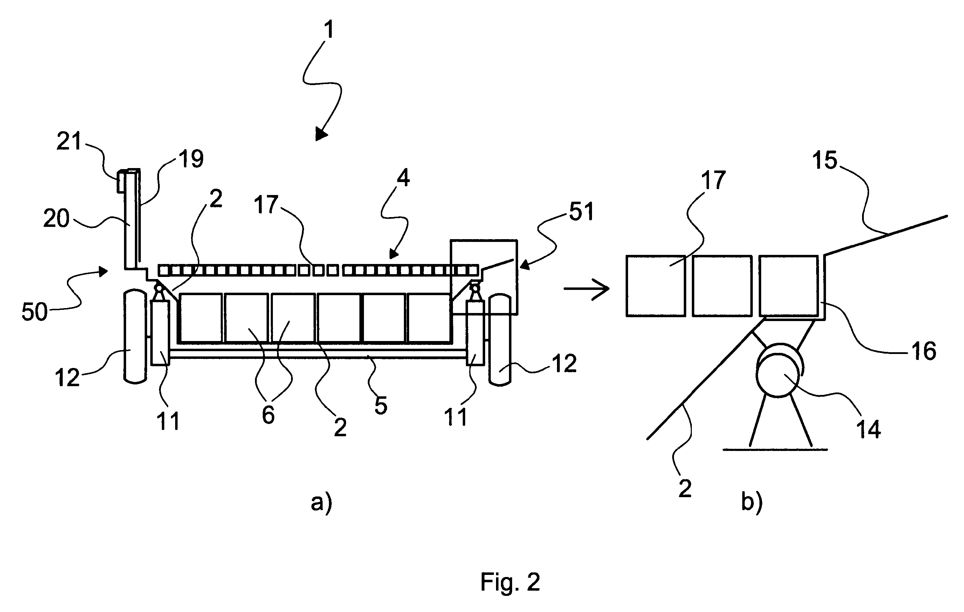

The frame is identical to that of a common farm trailer, with a few variations:
- in a plan view, it has a U-shape consisting of three steel side members, two side members being parallel to the direction of movement and one front side member being transversal thereto;
- there is no axle between the wheels 12, which are each mounted on independent supports 11 to reduce the dimensions under the box 2; instead there is a flat side member 5 reinforcing the frame (Fig. 2) between the wheel supports 11;
- the drawbar 13 is telescopic and fixed to the frame with a hinge that allows it to rotate, enabling (in the field) an offset movement with respect to the drawing vehicle 10; this arrangement allows also tall tractors to travel along the centre of the space between tree rows while the machine is towed under the crowns (Fig. 1).

The possible oil-pressure jack for tipping the box is positioned at the front of the machine: this avoids obstructions in the centre of the frame, allowing the insertion of the tank-shaped box having a regular flat bottom.

The box 2, provided with adequate ribs, is however applied to the frame by means of ball joints 14 that enable rear tipping. It has a rectangular parallelepiped-shaped cavity, e.g. 3,5 metres long by 2 metres wide by 0,40 metres deep, with three sides stably closed and only the rear side consisting in a door hinged laterally at the top, which may be opened during tipping for the unloading operations. The dimensions of the box 2 are such that it may be fitted in large part inside the frame and has a pre-determined depth, advantageously between 0,35 and 0,45 metres, so as not to create an excessive layer of olives reciprocally overlapping. Said box 2 may contain a plurality of crates 6, e.g. about thirty-five on a single plane, arranged on the regular bottom plane.

The top periphery of the box 2 is provided, both on the fixed sides and on the door, with metal brackets, for example 10 cm wide, inclined outwards and upwards. Except on the door, the brackets 15 are shaped so as to contain a longitudinal recess 16 (Fig. 2) into which a treading grilled plane 17 is inserted, closing the box, having a mesh size, for example, of 3 cm x 3 cm. The grilled plane 17 may consist of several separate parts, juxtaposed to be lifted and removed by only one person without excessive effort.

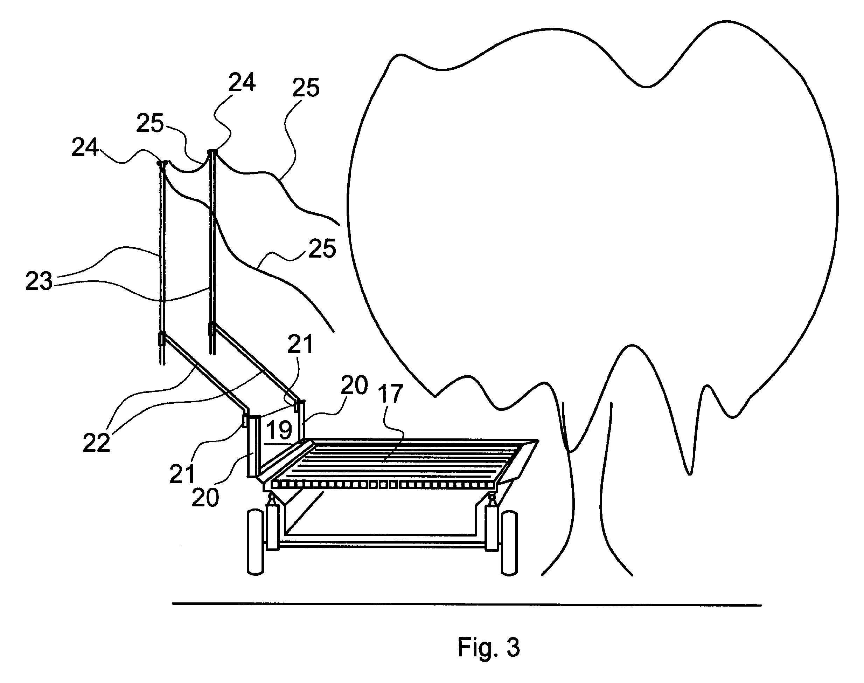

At the level of the treading plane, on a first side 50 of the box, there is inserted a metal side-board 19, e.g. about 50 cm high as on a farm trailer, hinged at the bottom and fixed to two pillars 20 (Fig. 2) integral with the box 2 at the ends of said first side 50. The hinged side-board, when opened to about 85°, allows to use an extension of the treading and harvesting plane in the case of very wide crowns. The top end of each pillar 20 is provided with a tubular support 21, for example with a 3 cm x 3 cm square section and 10 cm in length, (Fig. 2) into which fits a bottom end of a rod 22, for example one metre long (Fig. 3), inclined at an angle of about 45° to the vertical and projecting outwards with respect to the box. The top ends of the rods 22 are provided with a further steel tubular support, for example with a square section and 8 cm in length, fixed or welded vertically thereto. Inserted into these further tubular supports are the bottom ends of rods 23, with a compatible section and for example 150 cm in length (Fig. 3), which slide therein and are provided with catches. The top ends of the rods 23 are provided with eyelets 24 for attaching top peripheral elastic tie-rods to which the nets are fixed. The slipping rods 23 serve to support the nets and adapt them, una tantum, to the height of the crown of each specific tree, or to lower them to reduce the vertical dimensions when moving the machine.

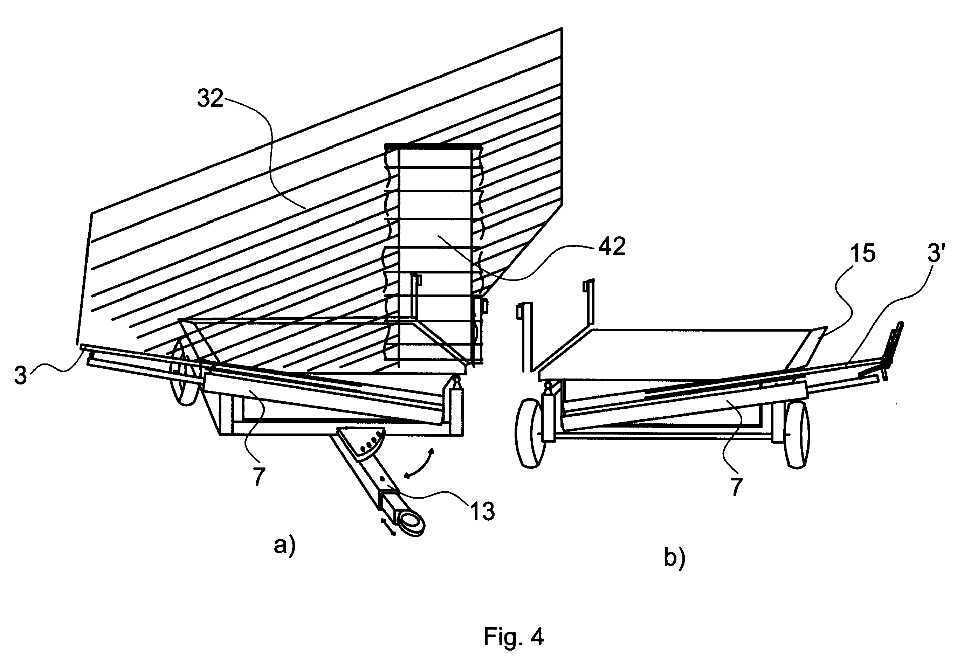

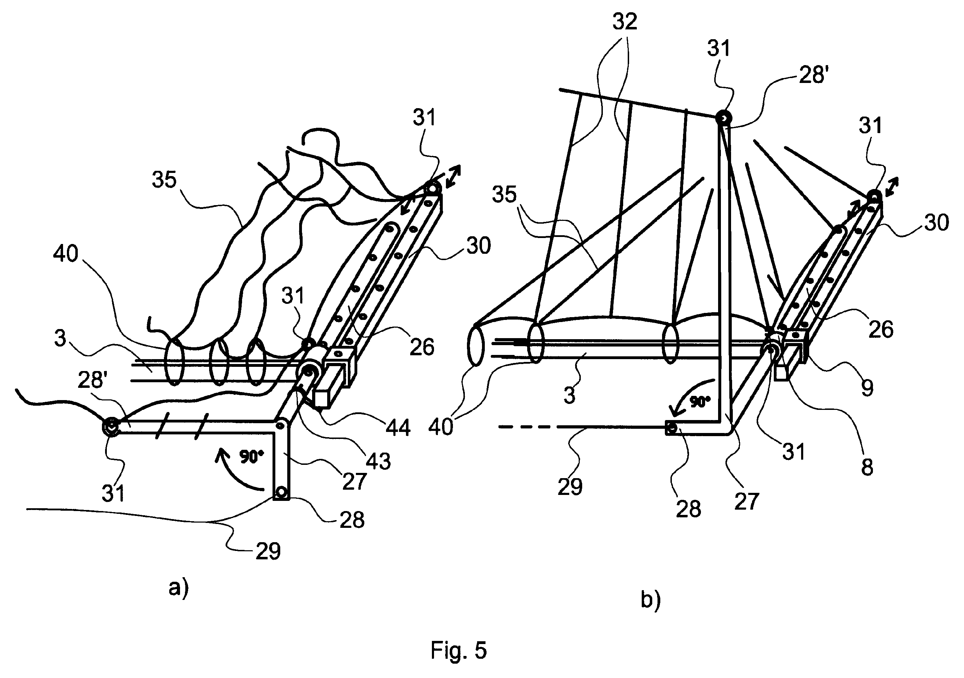

Fixed to the box 2, on both the front and rear sides, parallel thereto and at the level of a top edge, there is a telescopic, single-stem rod 3 (Figures 4 and 5), for example with a 4 cm x 4 cm square section and of about 2 metres in length. The telescopic rod 3 is inclined at a pre-determined angle, preferably about 15°, to the horizontal and has the slipping part connected at the end to a double-acting pneumatic cylinder 7, substantially of an equal length as the rod 3 and placed parallel thereto, which moves it.

Each telescopic rod 3 is positioned so that the end of the extending element, when it is in the retracted position, protrudes by about 10 cm from the top edge of the second side 51 of the box 2, opposite the first side 50, while the base is anchored to the box in proximity of the first side 50 at a lower height to enable it to slope at the predetermined angle (Fig. 4a).

The rear telescopic rod 3 and the pneumatic cylinder 7 thereof, unlike the front telescopic rod and pneumatic cylinder, are fixed to the tipping door so as to avoid hampering it when it opens (Fig. 4b).

The use of telescopic rods 3 with a square section is preferred to avoid uncontrollable rotational movements of the net supports, which are orthogonally fixed to said rods 3.

To the movable end of the telescopic rods 3, two tubular supports 8, 9 are orthogonally welded, between which net support rods are placed (Fig. 5): the first tubular support 8 is cylindrical; the second tubular support 9 has a square section, and for example both are about 8 cm in length.

Fitted into the first support 8 is a sliding shaft or rod 26, to the external end of which an 'L'-shape rod 27 (Fig. 5) is welded, with a longer arm of about 1 metre and a shorter arm of about 30 cm, for example. A flexible tie-rod 29 is connected to the end 28 of the shorter arm, said flexible tie-rod having a length proportional to the stroke of the piston of the pneumatic cylinder 7, and is fastened at the other end to the proximal corner of the box.

Simply fitted into the second support 9 is a tubular rod 30, with a 3 cm x 3 cm square section, for example. In Figure 5, the fastening eyelets for the elastic cables or tie-rods for the nets are indicated by numeral 31.

Both the shafts 26 and rods 30 may slide inside the respective tubular supports for una tantum manual accommodations. The shafts 26 may slide to draw up the two substantially vertical sides of the net cage in order to prevent, if the space between the tree lines is very narrow, the nets from catching on the crown of the previous and next trees; the rods 30 may slide to adapt the nets 35 to the width of the trunks, especially if the system of nets may wrap around several trunks at the same time (Fig. 8G).

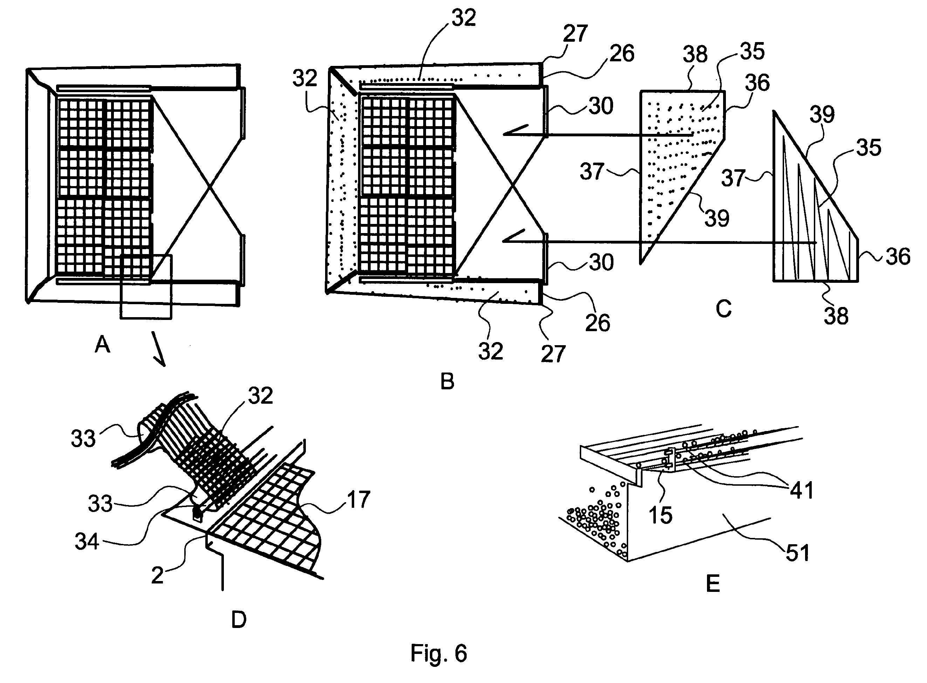

The set of eyelets 31 positioned at one vertex of the rods 27 forms the mechanical support to which are fixed the ropes or elastic tie-rods (Fig. 6A) that support and stretch the vertical peripheral nets 32 (Fig. 6B). The same nets 32, at the base, are fixed to the top edge of the side-board 19 and to the two box sides transversal to the side-board by means of a tunnel-shaped turn-up 33 of the nets themselves, into which steel planchets 34 are inserted, held in place by suitable eyelets integral with the box 2. The same type of turn-up is used for the connection with the elastic ropes of the top edges (Fig. 6D).

This mode of fastening the nets to the machine facilitates assembly/disassembly operations.

Figure 6C shows how there are two nets 35 for the base of the crown (drawn in an exploded view) and that, once they are spread by the outward sliding movement of the stem of the telescopic rods 3, they have a trapezoidal shape and are partially overlapping. This overlapping allows to connect the nets 35 to the side bracket 15 of the box 2 on offset planes, e.g. of about 10 centimetres (Fig. 6E), thus creating two planes for intercepting the olives inclined with respect to the horizontal and reciprocally separated. In this way, the lower interception plane may also channel the olives without obstacles towards the grilled plane 17. If the interception planes were not offset, the olives harvested in the not covered triangle of the top net 35 would remain blocked by the contact area between the two nets 35. Both said nets 35 create a "modellable tray" with two elastic ribs crossing in an X that, as the "tray" is extended by the outward sliding movement of the stem of the telescopic rods 3, retract around the obstacle created by the trunk, while at the same time closing around it with a loop at an increasingly tight angle, see the angles shown in sequence D÷F in Fig. 8.

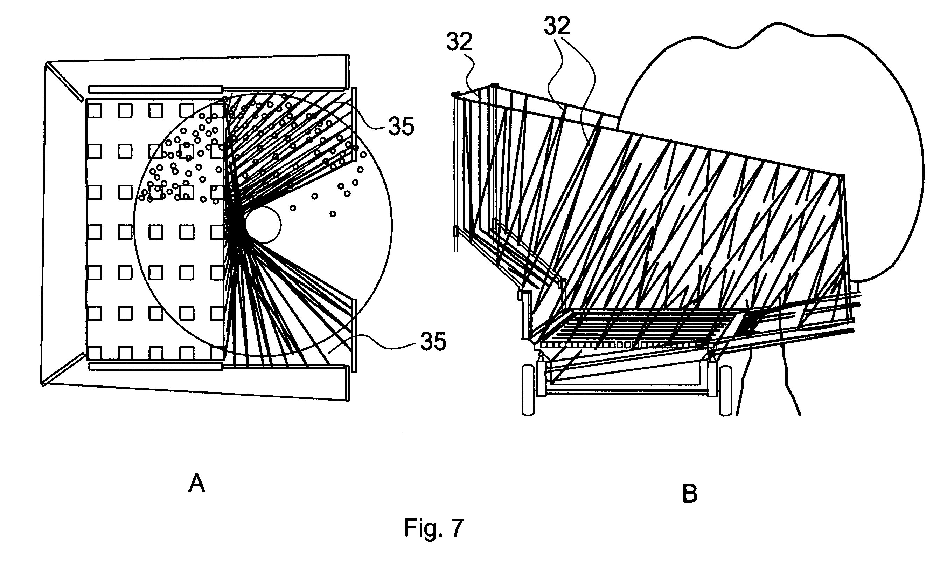

This particular arrangement advantageously allows to use a very simple yet effective system, to solve the problem of the automatic occlusion of the nets under the crown, by wrapping - like a scarf - around the trunk on the harvest side, and at the same time channeling the olives into the box (Fig. 7A), the nets 35 being well extended and appropriately inclined.

This system is possible because the sides 36 and 37 of each of the two base nets 35 are fastened to inelastic supports, rod 30 and planchet 41 on the bracket 15 of the box; side 38 is connected to rings 40, e.g. made of steel, that, by sliding freely on the telescopic rods 3, do not limit the net to telescopic movements (Fig. 5), while side 39 is connected to an elastic rope by means of a tunnel-shaped turn-up. This solution with two overlapping base nets 35, suitable for wrapping around the trunk of the tree, allows to channel the olives, because the nets 35 slide along the trunk while occluding it, and are kept taut by the inelastic supports so as to maintain a regular, inclined plane promoting the olive rolling towards the grilled plane 17 of the box 2. Other solutions, even practically accomplished, for example a single base net held in place by elastics, have inevitably led to the creation of a non-draining dead end.

Figure 7A shows how the harvesting area of the trapezoidal nets 35 intercepts a very large part of the drop area of the drupes, which are known to be peripherally concentrated on the crown. This demonstrates the effectiveness of the invention. On the other hand, the vertical (peripheral) interception is ensured by the nets 32. The operation of the machine of the invention involves two steps:
a) positioning the machine in proximity of the tree,
b) spreading the interception nets.

### Point a): Positioning the machine

The machine is simply towed along the row of trees, with discontinuous straight-line movement, tangentially to the trunks (Fig. 1), and is operatively placed when the central part of the box coincides with the trunk. The machine may move under the crowns because, by retracting the telescopic rods 3, the base nets 35 - defining the "tray" - are compacted along the corresponding side of the box, the rods 27 rotate from the position shown in Figure 5b to the position shown in Figure 5a due to the weight of the nets 32, and the fact that they are no longer held in place by the ropes 29.

### Point b): Spreading the nets

As mentioned above, the mechanism involves the use of a small air compressor equipped with a pressure switch - e.g. max. 10 Bar and with a 12 V power supply provided by the tractor battery - and connected to a distributor that powers in parallel the two pneumatic cylinders 7 that in turn drive the telescopic rods 3. The compressor and the distributor are fitted on the tractor. The machine of the invention is connected to the tractor 10 by the drawbar 13 and also by two small, flexible compressed air hoses, for channeling the compressed air to the two-way cylinders. The system does not require any air tank.

With the central part of the side of the box coinciding with the trunk and a few centimetres away, the operator, by switching on the cylinders 7, activates the extension of the telescopic rods 3, which by their movement drag the two trapezoidal nets 35 that wrap around the trunk (see sequence D÷F in Figure 8).

At the same time, by means of the same movement, there is a stretching of the steel cords 29 connected at one end to the adjacent corner of the box 2 and at the other end to the shorter arm of the rods 27. When approaching the stroke end, the cord 29 begins to stretch and puts in traction said shorter arm, causing the longer arm of the rod 27 to rise vertically (see sequence A÷C in Figure 8 and Figure 5), which drags up the nets 32.

The time needed to spread all the nets 32, 35 is advantageously the time taken for the complete translation of the telescopic rods 3, i.e. a few seconds. At this point, the machine is operational, i.e. it is ready for interception and stowage.

There is a small opening 42 with a related ladder, for example in the net 32 facing the tractor, through which the operator can quickly access the grilled plane 17 of the box. The opening 42 is obtained by cutting out a rectangular of net of an appropriate size and overlaying it with a wider section of net sown on the inside of the net cage at the top only, and weighed down at the bottom by an iron rod (Figure 4).

Once the operator has finished beating by means of a manual harvesting equipment, all he has to do is to reverse the command for the cylinders 7, thereby retracting the telescopic rods 3, to re-compact all the nets 35, 32: the base nets 35 fold up (detail X of Figure 8), while the substantially vertical, side nets 32 are dropped by the rotation towards the machine of the longer arm of the L-shaped rod 27, which is no longer held in place by the rope 29 (see sequence C÷A in Figure 8).

The continued rotation of the longer arm of the rod 27 beyond the horizontal is prevented by a stop in the shape of a hollow cylinder blocked with a snap split pin around the shaft 26 and provided with a projection 44 that stops the rotation of the shaft 26 coming into contact with the rod 30 when the longer arm of the rod 27 is in a position substantially coplanar to the grilled plane 17 (Figure 5a).

The machine of the invention has been designed to be simple and economical from the point of view of construction and maintenance, as well as to be versatile and all-purpose.

To meet these first characteristics, the machine does not require any special devices specifically constructed for its peculiar operative purpose.

The decision to move the telescopic rods pneumatically instead of in an oil-pressure manner implies considerable advantages: the pneumatic cylinders are much lighter (aluminium), much cheaper and do not constrain the machine to a costly hydraulic system.

In the absence of hydraulic distributors, the box may be tipped using an oil tank and a manual pump, which is a less expensive solution.

As far as tipping is concerned, it should be specified that tipping is not strictly necessary for the machine to work, since the following loading options are also possible (versatility):
1) the crates 6 (Figure 2) may be placed directly on the bottom of the box, are automatically filled by the drupes falling through the grilled plane 17, and may then be removed by sliding them through the rear door or by taking them from above after removing said grilled plane;
2) large industrial plastic crates, known as "bins", may be arranged on the bottom, which are bigger than the standard crates 6, but in this case mechanical lifters need to be used to move them, after removing the door, the overhanging net and the grilled plane.

Only in the case of the drupes falling directly into the box 2, free from the crates or industrial containers, does the box need to be hydraulically tipped.

In addition, pneumatic hoses are also much cheaper than hydraulic hoses, they are smaller (10 mm diameter hoses are sufficient) and flexible, and may be easily replaced even in the field in a few minutes as there are provided quick-fitting joints that are easy to be found and low-cost. Instead, hydraulic hoses as well as being more expensive need to be sent to specialist workshops for repair/replacement, which may not be done in the field, thereby wasting a considerable amount of time.

A 12-Volt pneumatic micro-compressor consuming 30-50 A/h enables the machine of the invention to be connected to a simple battery and, given its discontinuous use for only a few seconds, the load on the accumulator is very low.

Connecting the compressor to a pressure switch automates the activation thereof, thus avoiding the need for manual operation each time.

The use of 12-Volt electrical energy only, as well as being safe from the safety point of view, also makes the machine extremely versatile to be used because, with the appropriate mechanical accommodations (braking, electrical and recognition systems), it may be towed by any means of transport without hydraulic system (of suitable size and power), including cars, off-road vehicles, small tractors, or motor cultivators hinged onto the drawbar 13. The latter type of towing would give the machine a considerable mobility in areas with irregular tree spacing or limited room for manoeuvre, even with a small loading capacity.

For these reasons, the telescopic drawbar 13 also enables an easy replacement of the coupling element, by adjusting only the slipping part.

The nets used by the machine are the same as those used for ground harvesting; in addition, they are fractioned (three nets 32, one on each side of the "cage", and two nets 35 for the under-crown component) because they are quicker and easier to be disassembled for storing the harvesting system or replacing it in the event of a tear. The gaps at the joints between the net portions are closed by cutting out nets 32 with wider edges, overlaying and fixing them in place by means of common plastic tie-wraps for electrical cables.

The elastic net-stretching ropes are those commonly available on the market.

As far as all-purpose use is concerned, the machine may be easily transformed into a wagon with a double bottom. Removing the nets by unhooking the elastic ropes, removing all the rods from their seats and disassembling the telescopic rods with the respective cylinders, a wagon with a double bottom and grilled plane, with a single side-board, is obtained.

To transform it into a proper trailer, two tubular supports are provided which are obtained in the corners of the box on the side opposite the side with the side-board, e.g. with a section of about 6 cm x 6 cm, said two tubular supports being plugged during harvesting, into which it is possible to insert another two pillars that act as supports, with the appropriate hooks, for the missing side-boards. This gives a boxed wagon with a double bottom.

This versatility is very useful in the final step of harvesting, because once the crates filled during the last run are placed on the double bottom, those crates previously filled and temporarily left on the ground are loaded onto the grilled plane. In this manner, the machine allows to transport to the processing plant or mill all or a large part of the harvested product, even if it exceeds the capacity of the container.

## Claims

1. A machine for the interception and stowage of drupes comprising
- a transportable platform (4), comprising a container (2) closed at the top by a grilled plane (17) that allows the passage of the drupes into the container (2) and adapted to support at least one operator;
- first support means (22, 23) for supporting at least one first net (32), the first means being arranged on a first side (50) of the container (2) and adapted to upwardly support at least part of said at least first net (32);
- second support means (26, 30) for supporting said at least one first net (32) and at least one second net (35), the second means being arranged on a second side (51) of the container, opposite the first side (50);
**characterized in that** said second support means (26, 30) may be driven by actuators (3, 7) so as to translate parallel to said second side (51) both to support said at least one first net (32) upwards along two sides transversal with respect to said first side (50), and to spread said at least one second net (35) on a respective plane inclined with respect to the grilled plane (17) to intercept falling drupes and facilitate their rolling towards said grilled plane (17), said at least one second net (35) being elastic and configured so that it may occlusively wrap around at least one trunk on the harvesting side.

2. A machine according to claim 1, wherein there are provided two second nets (35) which are adapted to be spread over respective, reciprocally staggered planes which are inclined with respect to the grilled plane (17).

3. A machine according to claim 1, wherein said actuators comprise pneumatic or hydraulic cylinders (7).

4. A machine according to claim 3, wherein there are provided two pneumatic or hydraulic cylinders (7) associated with a respective telescopic rod (3), at one end of which respective second support means (26, 30) are attached.

5. A machine according to claim 4, wherein said telescopic rod (3) is inclined at a pre-determined angle, preferably about 15°, to the grilled plane (17) and has the slipping part connected at the end thereof to the respective pneumatic cylinder (7) placed parallel thereto.

6. A machine according to claim 5, wherein said second support means include a first rod (26) and a second rod (30), respectively, arranged parallel to the second side (51) and sliding inside a respective tubular support (8, 9) to accommodate the extension of the at least one first (32) and one second (35) nets.

7. A machine according to claim 6, wherein at the external end of the first rods (26) there is fixed a respective third L-shaped rod (27) in which
- to one end (28) of the shorter arm thereof there is connected a first end of a respective flexible tie-rod (29), having a length proportional to the stroke of the piston of the pneumatic cylinders (7) and connected at its second end to a proximal corner of the container (2),
- and to one end (28') of the longer arm thereof there is provided a respective first fastening eyelet (31) for elastic tie-rods of said at least one first net (32),
so that during spreading the at least one second net (35), in proximity of the stroke end of the piston of the pneumatic cylinders (7), each respective flexible tie-rod (29) starts to stretch putting in traction said shorter arm and causing the longer arm of the respective third rod (27) to rise vertically, in order to support said at least one first net (32) upwards.

8. A machine according to claim 7, wherein first fastening eyelets (31) for the elastic tie-rods of the nets are also provided on the first rods (26) and on the second rods (30).

9. A machine according to claim 1, wherein said first support means comprise a system of rods (22, 23) fixed to the ends of the first side (50) of the container (2) and provided on top with fastening eyelets (24) for elastic tie-rods to which said at least one first net (32) is fixed.

10. A machine according to claim 2, wherein said two second nets (35), once spread, have a trapezoidal shape and are partially overlapping, thus wrapping around a large part of the trunk of the tree on the harvesting side.

11. A machine according to claim 1, wherein a single first net (32) or three first nets (32) are provided, each first net (32) being arranged at the first side (50) and at two sides transversal with respect to said first side of the container (2), respectively.

12. A machine according to claim 11, wherein an openig gap (42) is provided in said single first net (32) or in one of the said three first nets (32) through which the operator can access the grilled plane (17) of the platform (4).

13. A machine according to claim 1, wherein the container (2) has a rectangular parallelepiped shape, with a regular bottom plane and with three sides stably closed including said first and second sides (50, 51), and one side only consisting of a hinged door that may be opened when tipping the container (2) for the drupe unloading operations.

14. A machine according to claim 13, wherein the container (2) is dimensioned so as to contain a plurality of crates (6) arranged on the regular bottom plane and wherein, at the level of the grilled plane (17), a side-board (19) is provided on the first side (50) of the container (2).

15. A machine according to claim 1, wherein an oil-pressure jack is provided for tipping the container (2).

## Patentansprüche

1. Maschine zum Auffangen und Sammeln von Steinfrüchten, welche umfasst:
- eine transporttaugliche Pritsche (4), welche einen Behälter (2) umfasst, der an seiner Oberseite durch eine Gitterfläche geschlossen ist, welche den Durchtritt der Steinfrüchte in den Behälter (2) ermöglicht und so ausgelegt ist, dass sie mindestens eine Bedienperson trägt;
- erste Stützmittel (22, 23) zum Abstützen von mindestens einem ersten Netz (32), wobei diese ersten Mittel auf einer ersten Seite (50) des Behälters (2) angeordnet und so ausgelegt sind, dass sie nach oben hin mindestens einen Teil des genannten mindestens einen ersten Netzes (32) abstützen;
- zweite Stützmittel (26, 30) zum Abstützen des genannten mindestens einen ersten Netzes (32) und mindestens eines zweiten Netzes (35), wobei diese zweiten Mittel auf einer zweiten Seite (51) des Behälters, die der ersten Seite (50) gegenüber liegt, angeordnet sind;
**dadurch gekennzeichnet, dass** die genannten zweiten Stützmittel (26, 30) von Stellgliedern (3, 7) dergestalt angetrieben werden, dass sie parallel zu der genannten zweiten Seite (51) eine translatorische Bewegung ausführen, damit beide das genannte mindestens eine erste Netz (32) nach oben längs zweier Seiten in Querrichtung zur genannten ersten Seite (50) abstützen und das genannte mindestens eine zweite Netz (35) in einer zugehörigen, in Bezug auf die Gitterfläche (17) geneigten Ebene ausbreiten, um die herabfallenden Steinfrüchte aufzufangen und ihre Rollbewegung in Richtung auf die genannte Gitterfläche (17) zu erleichtern, wobei das genannte mindestens eine zweite Netz (35) elastisch ist und so gestaltet ist, dass es sich verschließend um einen auf der Abernteseite befindlichen Baumstamm wickeln kann.

2. Maschine nach Anspruch 1, bei welcher zwei zweite Netze (35) vorhanden sind, welche so ausgelegt sind, dass sie über zugehörige und gegenseitig versetzt angeordnete Flächen ausgebreitet werden, welche in Bezug auf die Gitterfläche (17) geneigt sind.

3. Maschine nach Anspruch 1, bei welcher die genannten Stellglieder pneumatische oder hydraulische Zylinder (7) umfassen.

4. Maschine nach Anspruch 3, bei welcher zwei Pneumatik- oder Hydraulikzylinder (7) vorhanden sind, die mit einer zugehörigen Teleskopstange (3) verbunden sind, an deren einem Ende zugehörige zweite Stützmittel (26, 30) angebracht sind.

5. Maschine nach Anspruch 4, bei welcher die genannte Teleskopstange (3) unter einem vorbestimmten Winkel, vorzugsweise etwa 15°, zur Gitterfläche (17) geneigt ist und deren gleitendes Teil an seinem Ende mit dem zugehörigen Pneumatikzylinder (7), der parallel dazu angeordnet ist, verbunden ist.

6. Maschine nach Anspruch 5, bei welcher die genannten zweiten Stützmittel eine erste Stange (26) bzw. eine zweite Stange (30) enthalten, welche parallel zur zweiten Seite (51) angeordnet sind und im Innern einer zugehörigen rohrförmigen Stütze (8, 9) gleiten, um die Erweiterung des mindestens einen ersten (32) und mindestens einen zweiten (35) Netzes anzupassen.

7. Maschine nach Anspruch 6, bei welcher am äußeren Ende der ersten Stangen (26) eine zugehörige dritte L-förmiger Stange (27) befestigt ist, bei welcher
- mit dem Ende (28) ihres kürzeren Arms ein erstes Ende einer zugehörigen biegsamen Verbindungsstange (29) verbunden ist, welche eine Länge proportional dem Kolbenhub der Pneumatikzylinder (7) aufweist und welche an ihrem zweiten Ende mit einer nahen Ecke des Behälters (2) verbunden ist,
- und am Ende (28') ihres längeren Arms eine zugehörige erste Befestigungsöse (31) für die elastischen Verbindungsstangen des genannten mindestens einen ersten Netzes (32) vorhanden ist, so dass während des Ausbreitens des mindestens einen zweiten Netzes (35) in der Nähe des Hubendes des Kolbens der Pneumatikzylinder (7) jede zugehörige flexible Verbindungsstange (29) beginnt, durch Ausübung von Zugkraft auf den genannten kürzeren Arm diesen zu ziehen, um dadurch zu bewirken, dass der längere Arm der zugehörigen dritten Stange (27) sich in die Senkrechte erhebt, um das genannte mindestens eine erste Netz (32) nach oben abzustützen.

8. Maschine nach Anspruch 7, bei welcher erste Befestigungsösen (31) für die elastischen Verbindungsstangen der Netze auch an den ersten Stangen (26) und an den zweiten Stangen (30) vorhanden sind.

9. Maschine nach Anspruch 1, bei welcher die genannten ersten Stützmittel ein System von Stangen (22, 23) umfassen, welche an den Enden der ersten Seite (50) des Behälters (2) befestigt sind und an der Oberseite mit Befestigungsösen (24) für die elastischen Verbindungsstangen versehen sind, an denen das genannte mindestens eine erste Netz (32) befestigt ist.

10. Maschine nach Anspruch 2, bei welcher die genannten zwei zweiten Netze (35), sobald sie ausgebreitet sind, eine trapezförmige Gestalt aufweisen und sich teilweise überlappen, so dass sie sich um einen großen Teil des Baumstamms auf der Abernteseite wickeln.

11. Maschine nach Anspruch 1, bei welcher ein einzelnes erstes Netz (32) oder drei erste Netze (32) vorhanden sind, von denen jedes erste Netz (32) an der ersten Seite (50) bzw. an zwei anderen Seiten, die in Bezug auf die genannte erste Seite des Behälters (2) quer verlaufen, angeordnet ist.

12. Maschine nach Anspruch 11, bei welcher ein Öffnungsspalt (42) in dem genannten einzelnen ersten Netz (32) oder in einem der genannten drei ersten Netze (32) vorhanden ist, durch welchen die Bedienperson Zugang zur Gitterfläche (17) der Pritsche (4) erlangen kann.

13. Maschine nach Anspruch 1, bei welcher der Behälter (2) die Gestalt eines Quaders aufweist mit einer gleichmäßigen Bodenfläche und mit drei fest geschlossenen Seiten einschließlich der genannten ersten und zweiten Seite (50, 51) und mit einer Seite, welche lediglich aus einer klappbaren Tür besteht, welche geöffnet werden kann, wenn der Behälter (2) für die Arbeitsgänge des Entladens gekippt wird.

14. Maschine nach Anspruch 13, bei welcher der Behälter (2) so bemessen ist, dass er eine gewisse Anzahl von Stiegen (6) aufnimmt, die auf der gleichmäßigen Bodenfläche angeordnet sind, und in denen in Höhe der Gitterfläche (17) auf der ersten Seite (50) des Behälters (2) ein Seitenbrett (19) vorhanden ist.

15. Maschine nach Anspruch 1, bei welcher ein öldruckbetriebenes Kleinhebezeug zum Kippen des Behälters (2) vorhanden ist.

## Revendications

1. Machine d'interception et de stockage de drupes comprenant
- une plate-forme transportable (4), comprenant un contenant (2) fermé sur le dessus par un plan à grille (17) qui permet le passage des drupes dans le contenant (2) et qui est apte à supporter au moins un opérateur ;
- des premiers moyens de support (22, 23) pour supporter au moins un premier filet (32), les premiers moyens étant agencés sur un premier côté (50) du contenant (2) et sont aptes à supporter vers le haut au moins une partie dudit au moins un premier filet (32) ;
- des deuxièmes moyens de support (26, 30) pour supporter ledit au moins un premier filet (32) et au moins un deuxième filet (35), les deuxièmes moyens étant agencés sur un deuxième côté (51) du contenant, opposé au premier côté (50) ;
**caractérisée en ce que** lesdits deuxièmes moyens de support (26, 30) peuvent être entraînés par des actionneurs (3, 7) de manière à translater parallèlement audit deuxième côté (51) à la fois pour supporter ledit au moins un premier filet (32) vers le haut le long de deux côtés transversaux par rapport audit premier côté (50), et pour étaler ledit au moins un deuxième filet (35) sur un plan respectif incliné par rapport au plan à grille (17) pour intercepter des drupes qui tombent et pour faciliter leur roulement vers ledit plan à grille (17), ledit au moins un deuxième filet (35) étant élastique et étant configuré de telle sorte qu'il peut s'enrouler de manière occlusive autour d'au moins un tronc sur le côté de la récolte.

2. Machine selon la revendication 1, dans laquelle sont réalisés deux deuxièmes filets (35) qui sont aptes à être étalés sur des plans respectifs, réciproquement échelonnés, qui sont inclinés par rapport au plan à grille (17).

3. Machine selon la revendication 1, dans laquelle lesdits actionneurs comprennent des vérins pneumatiques ou hydrauliques (7).

4. Machine selon la revendication 3, dans laquelle sont réalisés deux vérins pneumatiques ou hydrauliques (7) associés à une tige télescopique respective (3), à une extrémité de laquelle des deuxièmes moyens de support respectifs (26, 30) sont fixés.

5. Machine selon la revendication 4, dans laquelle ladite tige télescopique (3) est inclinée selon un angle prédéterminé, de préférence selon environ 15° relativement au plan à grille (17) et présente la partie coulissante reliée à son extrémité au vérin pneumatique respectif (7) placée parallèlement à celui-ci.

6. Machine selon la revendication 5, dans laquelle lesdits deuxièmes moyens de support comprennent une première tige (26) et une deuxième tige (30), respectivement, agencées parallèlement au deuxième côté (51) et coulissant à l'intérieur d'un support tubulaire respectif (8, 9) pour recevoir l'extension des au moins un premier (32) et un deuxième (35) filets.

7. Machine selon la revendication 6, dans laquelle à l'extrémité externe des premières tiges (26) est fixée une troisième tige respective en forme de L (27) dans laquelle
- à une extrémité (28) de son bras plus court, il est relié une première extrémité d'un tirant flexible respectif (29) ayant une longueur proportionnelle à la course du piston des vérins pneumatiques (7) et relié à sa seconde extrémité à un coin proximal du contenant (2),
- et à une extrémité (28') de son bras plus long est réalisé un premier oeillet de fixation respectif (31) pour les tirants élastiques dudit au moins un premier filet (32) de sorte que pendant l'étalement du au moins un deuxième filet (35), à proximité de l'extrémité de course du piston des vérins pneumatiques (7), chaque tirant respectif flexible (29) commence à étirer en mettant en traction ledit bras plus court et en amenant le bras plus long de la troisième tige respective (26) à s'élever verticalement pour supporter ledit au moins un premier filet (32) vers le haut.

8. Machine selon la revendication 7, dans laquelle les premiers oeillets de fixation (31) pour les tirants élastiques des filets sont également réalisés sur les premières tiges (26) et sur les deuxièmes tiges (30).

9. Machine selon la revendication 1, dans laquelle lesdits premiers moyens de support comprennent un système de tiges (22, 23) fixées aux extrémités du premier côté (50) du contenant (2), et réalisées sur le dessus avec des oeillets de fixation (24) pour des tirants élastiques auxquels ledit au moins un premier filé (32) est fixé.

10. Machine selon la revendication 2, dans laquelle lesdits deux deuxièmes filets (35), lorsqu'ils sont étalés, ont une forme trapézoïdale et se recouvrent partiellement, en s'enroulant ainsi autour d'une grande partie du tronc de l'arbre sur le côté de la récolte.

11. Machine selon la revendication 1, dans laquelle un premier filet unique (32) ou trois premiers filets (32) sont réalisés, chaque filet (32) étant agencé au premier côté (50) et à deux côtés transversaux par rapport audit premier côté du contenant (2), respectivement.

12. Machine selon la revendication 11, dans laquelle un espace d'ouverture (42) est réalisé dans ledit premier filet unique (32) ou dans un desdits trois premiers filets (32) à travers lequel l'opérateur peut accéder au plan à grille (17) de la plate-forme (4).

13. Machine selon la revendication 1, dans laquelle le contenant (2) a une forme parallélépipédique rectangulaire, avec un plan de fond régulier et avec trois côtés fermés d'une manière stable incluant lesdits premier et deuxième côtés (50, 51) et un côté constitué seulement d'une porte à charnières qui peut être ouverte lors du basculement du contenant (2) pour les opérations de déchargement des drupes.

14. Machine selon la revendication 13, dans laquelle le contenant (2) est dimensionné de manière à contenir une pluralité de caisses à clair-voie (6) agencées sur le plan de fond régulier et où, au niveau du plan à grille (17), une réhausse (19) est prévue sur le premier côté (50) du contenant (2).

15. Machine selon la revendication 1, dans laquelle un vérin de levage sous pression d'huile est prévu pour le basculement du contenant (2).
